# EUROPEAN PATENT APPLICATION

(11) **EP 2 091 173 A1**
(43) Date of publication of application: **19.08.2009**
(21) Application number: 07117730.7
(22) Date of filing: 02.10.2007
(51) Int. Cl.: H04L 1/24, G01R 1/06

(54) **Magnetic field sensitive probe for data scheme analysis**

(71) Applicant: Agilent Technologies, Inc., Santa Clara CA 95051 (US)
(72) Inventor: Dippon, Thomas, 71116 Gaertringen (DE); Liebau, Henrik, 70563 Stuttgart (DE); Wendel, Tilmann, 71083 Herrenberg (DE); Klein, Frank, 71032 Böblingen (DE)
(74) Representative: Barth, Daniel Mathias

(57) **Abstract**

A device (100) for analyzing a data scheme, the device (100) comprising a probe (102) adapted for deriving probing data (104) by magnetically probing a signal (106) traveling along a signal transmission line (108), and a data scheme analyzer (110) adapted for analyzing the data scheme of the signal (106) traveling along the signal transmission line (108) based on an analysis of the derived probing data (104).

## Description

### BACKGROUND ART

The present invention relates to sampling and analyzing signals traveling along a propagation path.

For vehicle topologies consisting of CAN and LIN networks, the Vehicle Protocol Tester VPT501 of Agilent Technologies is a debugging and analysis tool for complex communication relations. For protocol analysis in automotive networks, it is conventionally necessary to make an electrically conductive contact between a test equipment and signals traveling along a cable for guiding an electric signal to a protocol analyzer.

### DISCLOSURE

It is an object of the invention to provide an improved protocol analyzing system. The object is solved by the independent claims. Further embodiments are shown by the dependent claims.

According to an exemplary embodiment, a device for analyzing a data scheme is provided, the device comprising a probe (such as a sensor) adapted for deriving probing data by magnetically probing (such as inductively measuring) a signal traveling along a signal transmission line (such as an insulated wire or cable), and a data scheme analyzer (which may have data processing capabilities, for instance a protocol analyzer) adapted for analyzing the data scheme of the signal traveling along the signal transmission line based on an analysis of the derived probing data.

According to another exemplary embodiment, a method of analyzing a data scheme is provided, the method comprising deriving probing data by magnetically probing a signal traveling along a signal transmission line, and analyzing the data scheme of the signal traveling along the signal transmission line based on an analysis of the derived probing data.

According to still another exemplary embodiment, a software program or product is provided, preferably stored on a data carrier, for controlling or executing the method having the above mentioned features, when run on a data processing system such as a computer.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in the context of analyzing electronic signals. The signal sampling scheme according to an embodiment of the invention can be performed or assisted by a computer program, i.e. by software, or by using one or more special electronic optimization circuits, i.e. in hardware, or in hybrid form, i.e. by means of software components and hardware components.

In the context of this application, the term "magnetically probing" may particularly denote a probing scheme which involves the measurement or sampling of a magnetic field value. This may involve, for instance, an inductive measurement principle based on Faraday's law, may involve the measurement of (for instance the time dependence of) a magnetic field by a Hall probe, etc. Magnetically probing may be performed in a contactless manner, i.e. without a direct mechanical contact between a current carrying wire to be analyzed, and the probe.

The term "data scheme" may particularly denote a scheme according to which a sequence of data, particularly digital data, is transmitted, i.e. a language or code for transmitting information which may be understandable by a machine or which may be evaluatable in an automatic manner. Using such a data scheme, information may be transmitted from a source entity to a destination entity, at least the destination entity being capable of extracting the information content of the data transmitted in accordance with the data scheme.

The term "probe" may particularly denote an instrument for physically examining the data scheme. Such a probe may be a contactless probe because this may allow sampling the signal transmitted in accordance with the data scheme without any direct physical contact, i.e. free from an ohmic connection to the signal transmission line. Thus, a probe may be a device for measuring and/or testing.

The term "signal transmission line" may particularly denote a cable or a wire or any other signal transmission path along which an electric signal is transported, particularly a digital electric signal such as a current signal varying between a high current value (which may encode a logical value "1") and a low current value (which may encode a logical value "0").

The term "data scheme analyzer" may particularly denote a device having processing and/or logic capability and being able to determine a scheme of the transmitted signal which scheme may be indicative of a data signal transmission characteristic. Particularly, the data scheme analyzer may analyze the content of the signal, and may be specifically configured for analyzing a digital signal such as a sequence of bits each having one of two logical values. Exemplary embodiments implement a protocol analyzer as the data scheme analyzer. Other exemplary embodiments implement a Logic Analyzer or an oscilloscope measurement unit as the data scheme analyzer. In all embodiments, it may be possible to measure a digital signal, and not only one current value.

The term "protocol analyzer" may particularly denote a device having processing and/or logic capability and being able to determine characteristics of the transmitted signal, for example whether the transmission of the signals corresponding to the data protocol is acceptable or erroneous. The term "protocol analyzer" may particularly denote any entity (hardware and/or software) used to monitor or verify that a protocol on a, for instance digital, network is operating correctly, and/or to extract data regarding the protocol.

According to an exemplary embodiment of the invention, a magnetic field generated around a circumference of a current-carrying signal transmission line may be sampled with a contactless operating probe which may measure a signal depending on the present magnetic field in response to a present electric current value in the signal transmission line. This may allow sampling the signal traveling within the signal transmission line (which is usually isolated by an insulating hollow cylindrical cladding) without making a direct contact to the current carrying signal transmission line. The probe may be simply positioned around the signal transmission line not necessarily contacting the latter to detect the time dependence of the magnetic field, allowing to derive data being a fingerprint of the electric signal transmitted via the wire in accordance with the data scheme. This may allow to retrieve information regarding the transmitted signal using physical phenomena such as Faraday's induction law or the Hall effect, both being based on magnetic fields in an environment of an electric signal carrying line. Thus, exemplary embodiments allow for protocol analysis with a current probe. Hence, exemplary embodiments may allow for a significant improvement over conventional systems, since the cables may now allow for a sampling of the signal without removing an insulation.

Next, further exemplary embodiments of the device will be explained. However, these embodiments also apply to the method and to the software program or product.

The signal traveling along the signal transmission line and being under analysis may be a digital signal. A digital signal may be a signal that is quantized from a discrete signal. By quantizing the signal, the values of a discrete signal are no longer continuous, but discrete. For instance, a digital signal may have either a logical value of "1" or "0". Thus, a digital signal may be one that uses discrete values rather than a continuous spectrum of values, as in the case of analog signals (which may be analyzed according to other exemplary embodiments). When analyzing digital signals, the data scheme analyzer only has to distinguish between two logical values, allowing to simply count "transitions" (for instance transitions from logical values "1" to "0", or vice versa) in the detected signal which makes the analysis very reliable. This allows implementing the device also under harsh conditions or when the signal transmission quality is poor.

The data scheme analyzer may be adapted for analyzing the content of the signal and/or the information encoded in the signal. Thus, details of the signal (such as a signal amplitude) which are not relevant for interpreting the signal information content need not necessarily be evaluated according to exemplary embodiments. For example, an analysis of an amplitude of the signal may be dispensable for analyzing the content, for example in a digital signal transmission system comprising an information carrying sequence of logical values of "1" and "0".

The data scheme analyzer may be adapted for analyzing a high-frequency signal, particularly for analyzing a signal having a frequency in the order of magnitude of MHz. Signals having a frequency of MHz or more may be used for signal transmission in a digital system, for example in a car wire harness. In such a context, signals having MHz frequency or above may be conveniently detected by the probe being capable to resolve a sequence of logical values "1" and "0" with a time duration of µs or less. Generally, the probe according to exemplary embodiments may be used independent of transmission frequencies. However, for technical implementation reasons, signals with very slow rise and fall times will be detected with less accuracy using induction. Thus, exemplary embodiments measuring signals having sufficiently high frequencies may be particularly appropriate.

The data scheme analyzer may be adapted for analyzing the signal in at least one layer above a physical layer in the Open Systems Interconnection Basic Reference Model (OSI layer model). The OSI model or OSI reference model may be denoted as a layered abstract description for communication. The layers described in the context of the OSI model are, from top to bottom, Application, Presentation, Session, Transport, Network, Data Link and Physical. A layer may be considered as a collection of related functions that provides services to the layer above it and receives service from the layer below it. In the context of the OSI model, embodiments analyzing a data scheme may preferably operate for data analysis in one of the above layers, i.e. not in the lowest physical layer. Layers being subject of an investigation according to an exemplary embodiment are the Link layer, the Data layer and the Application layer. In such layers, information content is managed, so that an analysis of such issues may be performed by exemplary embodiments.

The data scheme analyzer may be adapted for analyzing a bus signal. A bus may be denoted as a data pathway that connects two entities, such as a source and a destination of a control signal in the electronic in a car. A bus arrangement comprising multiple buses is formed by multiple conducting wires running in parallel. Different lines may be used to carry different types of information. Exemplary embodiments allow to analyze bus signals propagating between exactly two entities in a wireless or contactless manner.

The data scheme analyzer may be adapted for analyzing the bus signal of a Local Interconnect Network (LIN), a Controller Area Network (CAN), a Controller Area Network High Speed (CAN HS), a Controller Area Network Low Speed (CAN LS), or a FlexRay field bus system. A LIN bus is a bus system used with an automotive network architecture. A CAN may be denoted as a multicast shared serial bus standard for connecting electronic control units. CAN may be particularly implemented in noisy environments and can utilize a differential balanced line. A FlexRay field bus system is another automotive network communications protocol allowing for high data rates, time triggered behavior, redundancy, safety and false tolerance. However, embodiments may be applied to other bus architectures as well.

The data scheme analyzer may be adapted for analyzing the signal having a current amplitude of less than essentially 100 mA, particularly of less than essentially 10 mA, more particularly of less than essentially 1 mA. Thus, one exemplary field of application of embodiments is the sampling of signals having a relatively low current amplitude (for instance in a sub-ampere range), which can be resolved properly by a magnetic field detection based probing scheme. Therefore, data carrying signals (instead of pure power supply signals having a very high amplitude) are a focus of such embodiments.

The data scheme analyzer may be adapted for reconstructing the original signal by using an integrator (for instance a signal integrating electronic member). When the probe has detected a signal for instance based on measuring an induction voltage, i.e. a signal depending on the time derivation of the magnetic flux, the integration of such a signal may allow to recover the original signal. By taking this measure, particularly meaningful results may be obtained.

The data scheme analyzer may be adapted for analyzing the signal by reconstructing signal pulses (which may be related to peaks) based on derived signal peaks. When digital signals (switching between an electric signal having a high value and an electric signal having a low value) are traveling along a signal transmission line, their derivation may result in intense signals peaks which can be detected for instance based on the Faraday law, for instance by locating an induction coil in an environment of the signal transmission line. The presence/absence and the time characteristic of such peaks may allow to reconstruct an original shape of the signal pulse under analysis.

The data scheme analyzer may be adapted for reconstructing the signal pulses by using a flip-flop. Particularly a flip-flop having a hysteresis behavior is an electronic member which allows to reconstruct the signal with proper accuracy.

The probe may be adapted for deriving probing data by magnetically probing a current signal, another (for instance wire-bound) electric signal (such as a voltage signal) or an electromagnetic signal. Such an electromagnetic signal may be a signal which is carried by propagating electromagnetic waves, whereas an electric signal may be a signal which is carried along a physical path.

The probe may be configured to sense a magnetic field or a change in a magnetic field resulting from the signal traveling along the signal transmission line. The probe may further be configured to surround the signal transmission line in order to sense the magnetic field and/or a change in a magnetic field resulting from the signal traveling along the signal transmission line. Beyond this, the probe may be configured to inductively couple with the signal transmission line in order to sense at least one of the magnetic field and a change in a magnetic field resulting from the signal traveling along the signal transmission line. Therefore, an inductive measurement principle may be implemented advantageously according to exemplary embodiments, since the detection of an induction voltage in response to a time-dependent current signal traveling through a wire allows to obtain information regarding the signal having a high accuracy.

The probe may be configured as a pincer (or gripper or forceps) being mechanically operable (for instance with a hand of a user) to selectively at least partially enclose a cable carrying the signal to be analyzed. Thus, the pincer may simply enclose the cable without penetrating the latter. Therefore, in a non-invasive manner, it may be possible to sample the signal without disturbing the signal. The pincer may be manually operable by a user. Thus, some kind of clamp-on ammeter or clip-on ammeter may be provided which allows to sample the signal with a simple handgrip and without the necessity to remove an isolation of the cable.

Particularly, the probe may comprise a manually operable actuator adapted for selectively opening or closing the pincer (or gripper or forceps). Such a manually operable actuator may comprise a mechanical biasing mechanism, for example a spring mechanism which allows actuation of the probe only upon exceeding a predetermined threshold value. This may prevent undesired activation of the device in the presence of very small forces and may therefore suppress events of undesired operation of the device. By providing a spring mechanism (implementing a helical spring, a flat spring, etc.), a biased system may be provided which allows to change between a line enclosing and non-enclosing state of the pincer with a simple finger pressing operation. The biasing force maintains the pincer in a stable configuration in the absence of sufficiently large external forces.

The probe may comprise a handle (or grip) in and/or on which at a part of the data scheme analyzer or the entire data scheme analyzer may be accommodated or mounted. Therefore, a portable handheld device may be provided which can be manually operated by a user and which may have all components integrated in a portable member. The electronics for evaluating the derived signals may simply be included in a grip.

The probe may be adapted for deriving probing data by magnetically probing the signal traveling in a cable in a non-invasive manner. Therefore, it may become dispensable that an electric isolation of a cable is removed for obtaining a direct ohmic contact to the current carrying electrical conductor. This may be achieved by sensing a signal occurring in an environment of the cable when a signal is traveling in an interior of the cable.

The probe may be adapted for deriving probing data by simultaneously magnetically probing a plurality of signals traveling simultaneously in a plurality of different signal transmission lines. Thus, the probe may have different functionally decoupled sensing portions or measurement heads being sensitive to individual ones of the different cables through which current signals flow simultaneously. Hence, the probe may be used for single signal analysis, but may also be applied for multiple probes.

More particularly, the probe may be adapted for deriving probing data by simultaneously magnetically probing differential signals traveling simultaneously in two transmission lines. Differential signals may be signals carrying complementary information content, or in other words carrying the same information redundantly. By transmitting the information using differential signals, the reliability of a correct transmission may be increased even in the presence of signal disturbing effects. This redundancy may be used by a device according to an exemplary embodiment, since the simultaneous probing of differential signals may allow for an independent verification by the correspondingly other signal whether the interpretation of the signal by the device has been correct, thereby increasing the reliability and accuracy of the system.

The data scheme analyzer may be adapted for analyzing the differential signals by adding or subtracting the differential signals (for instance depending on an arrangement/orientation of the probe portions sensing the differential signals). For instance, the probe may comprise two oppositely wound coils for simultaneously magnetically probing the differential signals. By such an opposite winding, it is possible to evaluate the signals in a simple manner to derive the result.

The probe may be a magnetic field detector, such as a Hall probe. Such a Hall probe may measure the time dependence of the magnetic field in an environment of a signal transmission line, thereby allowing to derive information regarding to the current traveling through the wire being the origin for the generation of the magnetic field. Alternatively, an induction-based measurement principle may be applied, for example by using an induction coil which can be optionally be provided with a permanent magnetic core to increase the sensitivity.

The data scheme analyzer may be adapted for receiving the derived probing data in a wireless manner or in a wired manner. In the wired configuration, there is a wired connection between the data scheme analyzer and the probe. However, alternatively, a wireless communication between a wirelessly operated probe and a remote data scheme analyzer may be made possible (for instance using infrared communication, Bluetooth, etc.), allowing a user to conveniently use a portable device in the field.

The device may be adapted to probe an automotive signal transmission system, a high-speed plug connection system, a computer card connection system, a communication network connection system, a hub connection system, a switch box connection system, an extruder card connection system, or a printed circuit board connection system. Exemplary embodiments are particularly advantageous in the field of protocol analysis in the automotive sector, since a plurality of digital signals may be transmitted within the electronic system of a car, and error diagnosis or function checks of an electronic system of a car may be significantly simplified by the device.

The device may be adapted for serial protocol analysis. A serial protocol may be denoted as a protocol that sends data in one stream (through one line/media channel). There can be other streams/lines for control data. This is in contrast to a parallel protocol which sends the data in multiple streams. An advantage of a serial protocol may be simplicity, lower costs, less interference between media channels allowing longer cables and allowing for a higher possible data rate for one stream. Furthermore, a serial protocol may be sampled easier by the probe and may be analyzed easier by the data scheme analyzer. However, also parallel protocol analysis may be made possible by exemplary embodiments.

The probe may be adapted for deriving the probing data by inductively probing the signal traveling along the signal transmission line. An inductive measurement principle is contactless and has a high accuracy, since it is sensitive to the derivation of the actual signal, instead of being sensitive only to the signal amplitude.

According to an exemplary embodiment, a current pincer with a Hall probe may be provided for a wireless measurement and analysis of signals. A ferrite coil can be used for the contactless probing of signals in the automotive field allowing to sample high frequency signals in the MHz regime and small currents in the mA regime. The investigation of bus systems is possible, particularly when evaluating digital signals by measuring peaks which can be reconstructed into pulses by a flip-flop. Particularly, a current pincer may be used in order to sample a high frequency digital data sequence in such a manner that it is supplied to a data scheme analyzer. This can be performed with differential signals as well. Regarding the frequency behavior, the evaluation of signals having frequencies up to 10 MHz and more are possible, particularly when equipping an induction coil with a ferrite core. Alternatively, a Hall probe can be used instead of an induction coil, wherein a change of the signal of the Hall probe can be used for reconstructing the original signal, for instance by integration. Such an integration may be performed by an integrating circuitry or by a flip-flop having a hysteresis behavior. On the basis of the measured induced signals, it is possible to calculate back the original signals.

As an example for a possible data scheme analyzer which can be used according to exemplary embodiments, a J8115A system of Agilent Technologies can be implemented particularly for a Local Interconnect Network (LIN). Alternatively, a J8120A (Vehicle Protocol Tester 501) of Agilent Technologies may be implemented.

A contactless sampling (which may be highly advantageous under harsh conditions such as in oil environment) of digital signals for analyzing the signal content by a connected data scheme analyzer, particularly by evaluating higher OSI layers, may be provided. It is also possible to measure, with a corresponding current pincer, a plurality or all wires or signal transmission lines simultaneously. This may work particularly fine when investigating pure bus cables (carrying information) in contrast to pure supply cables (for instance current supply cables). Thus, according to an exemplary embodiment, an induced current measurement may be combined with the deriving of a spike signal and a protocol analysis performed therewith.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 to Fig. 4 show protocol analysis systems according to exemplary embodiments.

Fig. 5 shows a diagram illustrating signals occurring during a protocol analysis method according to an exemplary embodiment.

Fig. 6 shows a table including operation conditions for different bus systems.

The illustration in the drawing is schematically.

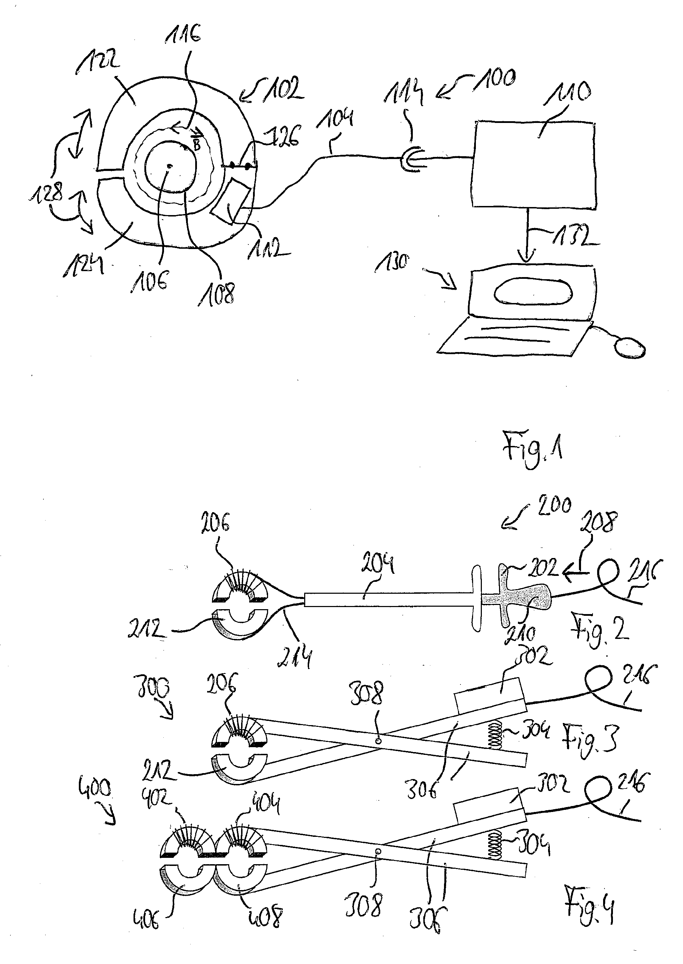

In the following, referring to **Fig. 1****,** a device 100 for analyzing a data protocol according to an exemplary embodiment will be explained.

The device 100 comprises a probe 102 (shown schematically in a cross-sectional view) adapted for deriving electric probing data 104 by magnetically probing a current signal 106 traveling along a signal transmission line 108 (extending perpendicularly with respect to the paper plane of Fig. 1) being enclosed by the probe 102.

A protocol analyzer 110 (such as a VPT501 (Vehicle Protocol Tester) of Agilent Technologies) is electrically coupled to the probe 102 via an interface 114. Alternatively, there may be a direct connection between the probe 102 and the protocol analyzer 110 without an interface 114. Further alternatively, there may be a wireless coupling between the probe 102 and the protocol analyzer 110.

The protocol analyzer 110 is adapted for indirectly analyzing the data protocol of the signal 106 traveling along the signal transmission line 108 based on an analysis of the derived probing data 104. The signal 106 is a digital bus signal in the MHz regime having an amplitude in the order of magnitude of several mA carrying control information for an automotive system, and the protocol analyzer 110 is adapted for analyzing the content of the signal 106. The data protocol according to which the signal 106 carries data content is a Local Interconnect Network (LIN) protocol.

The protocol analyzer 110 reconstructs a characteristic of the original signal 106 by evaluating the derived probing data 104. For this purpose, the protocol analyzer 110 analyzes the secondary signal 104 in order to derive conclusions regarding the signal 106. Signal peaks may be detected by the probe 102 and may evaluated by the protocol analyzer 110.

The probe 102 is adapted for deriving the probing data 104 by magnetically probing the current signal 106. When the current signal 106 has a time-dependent current value (it is recalled that the signal 106 is a digital signal switching between logical values of "1" and "0"), a time-dependent magnetic field is generated which is indicated schematically in Fig. 1 by reference numeral 116 and is denoted with B̅. This magnetic field B̅ generates a time-dependent signal (usually a Hall voltage) in a Hall sensor 112 of the probe 102 being a fingerprint of the signal content of the signal 106 traveling along the line 108 which propagates in a direction perpendicular to the paper plane of Fig. 1.

The sensor signal of the Hall sensor 112, i.e. a time-dependent Hall voltage, is applied as a signal 104 to the protocol analyzer 110 which can then calculate back the original signal 106. Thus, the probe 102 derives the probing data 104 by magnetically probing the signal 106 traveling in the cable 108 in a non-invasive manner.

In the present embodiment, signals traveling along an automotive signal transmission system are evaluated, for instance in the context of an application dealing with the verification of a proper operation of the transmission of control signals in a car.

As can be taken from Fig. 1, a pincer-like configuration of the probe 102 allows to selectively enclose the cable 108 by two half hollow cylindrical shells 122, 124 which can be selectively opened or closed by a hinge 126 allowing to pivot the half shells 122, 124 as indicated by arrows 128.

The protocol analyzer 110 may optionally be connected to a computer such as a PC 130 which is supplied with the output data 132 evaluated by the protocol analyzer 110. The PC 130 may then serve as a graphical user interface (GUI) via which a user can control the system 100 or can get access to the result of the analysis of the device 100. The function of the PC 130 may alternatively be integrated in the protocol analyzer 110.

In the following, referring to Fig. 2 to Fig. 4, probe configurations according to exemplary embodiments are explained as examples for possible mechanical designs.

As can be taken from **Fig. 2****,** a probe may be configured as a pincer 200 being mechanically operable to selectively enclose a cable carrying a signal to be analyzed.

The pincer 200 comprises a manually operable push actuator 202 adapted for selectively opening or closing the pincer 200 by pressing on the manually operable actuator 202 in a direction indicated by an arrow 208. Furthermore, the probe shown in Fig. 2 comprises a handle 204 in which a part of the protocol analyzer 110 or the entire protocol analyzer 110 may be accommodated. Thus, an interior of the handle 204 as well as an interior of a knob 210 may allow to house electronics in a space-saving construction. An induction coil 206 is shown as well as a ferrite core 212 inserted in the induction coil 206. A spring wire 214 is capable to transfer forces from the actuator 202 to the measurement head of the probe shown in Fig. 2. A cable 216 is shown for connection to a power supply and an output.

Another embodiment shown in **Fig. 3** shows a probe 300 which has a configuration with a press spring mechanism 304 attached to a two-piece handle 306. A hinge 308 is also shown in a central portion of the probe 300. When a user presses the two-piece handle 306 so that the end portions of the two-piece handle 306 approach one other, a probe head will open. When the user releases the two-piece handle 306, the probe head will go back to a closed state. A portion 302 of the probe 300 may be used for housing electronic components, for instance of the protocol analyzer.

**Fig. 4** shows a probe 400 having a dual ferrite core configuration for differential probing, including two ferrite cores 406, 408 as well as two coils 402, 404.

Protocol analysis of serial data buses is usually done by using interposer connectors or probe pins that make electrical contact to the bus under test. In some applications (for instance automotive environments) this is not desired or practical due to the multitude of different connector schemes. The wires (particularly twisted pair) that can carry the data signals on the other hand are accessible.

Exemplary embodiments provide a method to probe a digital bus without making an electrical connection to the conductors by using a current probe. Embodiments are applicable to serial buses for the current on a conductor (or pair of conductors) is modulated between two discrete values to transport information. If the voltage is modulated into a termination resistor, it may also create a modulated current. In serial protocols, the current difference between two discrete states are only few mA. A special, highly sensitive current probe can still be used to determine the two discrete levels and can therefore be used as a probe for analyzing serial data buses.

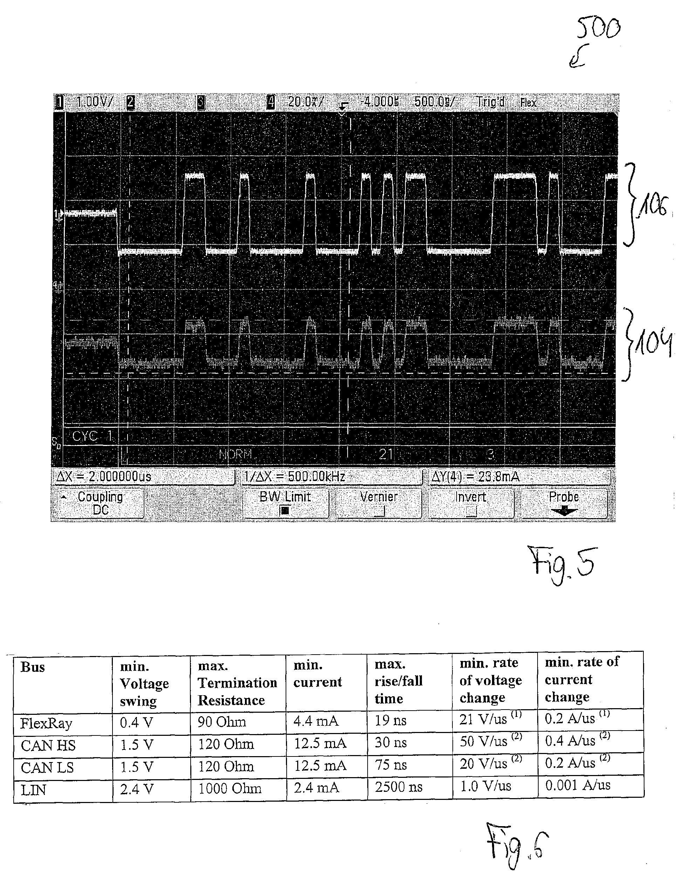

**Fig. 5** shows a diagram 500 illustrating an example of a FlexRay bus that is being electrically probed, and the output of a current probe according to an exemplary embodiment. In other words, the signal to be probed is denoted with reference numeral 106, and the derived signals denoted with reference numeral 104. It can be seen from Fig. 5, that curve 104 precisely follows curve 106.

For differential bus signals, further improvement of sensitivity and signal-to-noise ratio can be achieved by using a differential current probe. It may comprise two adjacent current probe sensors that are mounted next to each other with the coils wound in opposite directions. The positive and negative differential signal is fed through one probe sensor each.

In the following, further recognitions made by the present inventors will be illustrated based on which the present inventors developed exemplary embodiments of a contactless probe for serial protocol analysis in automotive applications.

Electronic systems are more and more used in the automotive industry. For protocol analysis in automotive networks it is conventionally necessary to make direct electric contact between the test equipment and the bus signals. This may be problematic due to non-standardized connections and harness designs, and sometimes causes the need for injuring the lines to be measured. In contrast to this, exemplary embodiments may use a current probe to measure bus signals without making electric contact, wherein the signal may be fed into a protocol analyzer. To increase signal integrity, it is possible to use a differential probe, which may subtract the current measured at both lines of the bus.

In the following, some aspects regarding mechanical configurations of devices according to exemplary embodiments will be explained.

It may be difficult to access individual wires within a cabling harness since they are often surrounded by a whole bunch of wires that are connected to the same electronic control unit. Therefore, a probe head according to exemplary embodiments may be very small, for instance not larger than the tip of a little finger. Also the probe handle (i.e. the parts where a user touches the probe when attaching it) may be at least 2 inches away from the probe head.

The inside diameter of the probe may be dimensioned to fit around a typical wire for serial data communications in vehicles, which is no more than approximately 3 mm in diameter (including insulation). Experiments of the present inventors showed that a coil at the probe having approximately 10 windings or more may be advantageous.

It may be advantageous that the electronics (which may include an amplifier for the probe) is positioned as close as possible to the probe head in order to reduce susceptibility to electromagnetic interference. One space-saving option is to mount the electronics in the probe handle.

In order to protect a ferrite core and a corresponding induction coil from mechanical damage, it may be advantageous to provide some kind of plastics or epoxy resin cover.

In the following, some aspects regarding a configuration of a differential probe head for sampling or scanning differential signals according to exemplary embodiments will be explained. In order to obtain a proper signal-to-noise ratio, suppress or eliminate common mode distortions and balance the distortion of the original signal across both differential wires, a "dual core" probe head with opposite windings may be advantageous.

In the following, some aspects regarding an electronic configuration according to exemplary embodiments will be explained. The probe may be capable to capture LIN, CAN LS, CAN HS and FlexRay traffic. A table shown in Fig. 6 summarizes some possibly relevant electrical characteristics for such buses. In **Fig. 6****,** footnote (1) denotes results of a calculation with worst case values from a FlexRay specification. In contrast to this, footnote (2) indicates data that are based on data from ST L9615 datasheet (CAN transceiver).

A magnetic field in a ferrite core may be proportional to a rate of current change in the conductor under test. The induced voltage and the coil may increase with the number of windings and the magnetic field.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A device (100) for analyzing a data scheme, the device (100) comprising a probe (102) adapted for deriving probing data (104) by magnetically probing a signal (106) traveling along a signal transmission line (108), and a data scheme analyzer (110) adapted for analyzing the data scheme of the signal (106) traveling along the signal transmission line (108) based on an analysis of the derived probing data (104).

2. The device (100) of the preceding claim, comprising at least one of:
the device (100) is adapted for analyzing a data protocol;
the data scheme analyzer (110) is adapted as one of the group consisting of a protocol analyzer, and a logic analyzer;
the signal (106) is a digital signal;
the data scheme analyzer (110) is adapted for analyzing one of the group consisting of a content of the signal (106) and an information encoded in the signal (106);
the data scheme analyzer (110) is adapted for analyzing a high-frequency signal (106), particularly for analyzing a signal (106) having a frequency in the order of magnitude of MHz;
the data scheme analyzer (110) is adapted for analyzing the signal (106) in at least one layer above a physical layer in the Open Systems Interconnection Basic Reference Model;
the data scheme analyzer (110) is adapted for analyzing the signal (106) in at least one layer above a physical layer in the Open Systems Interconnection Basic Reference Model, wherein the data scheme analyzer (110) is adapted for analyzing the signal (106) in at least one layer of the group consisting of a Link Layer, a Data Layer, and an Application Layer;
the data scheme analyzer (110) is adapted for analyzing a bus signal (106);
the data scheme analyzer (110) is adapted for analyzing a bus signal (106) of at least one of the group consisting of a Local Interconnect Network, a Controller Area Network, a Controller Area Network High Speed, a Controller Area Network Low Speed, and a FlexRay field bus system;
the data scheme analyzer (110) is adapted for analyzing the signal (106) having an amplitude of less than 100 mA, particularly of less than 10 mA, more particularly of less than 1 mA;
the data scheme analyzer (110) is adapted for reconstructing the original signal (106) by evaluating the derived probing data (104);
the data scheme analyzer (110) is adapted for reconstructing the original signal (106) by evaluating the derived probing data (104) using an integrator;
the data scheme analyzer (110) is adapted for analyzing the signal (106) by reconstructing signal pulses based on derived signal peaks;
the data scheme analyzer (110) is adapted for analyzing the signal (106) by reconstructing signal pulses based on derived signal peaks, wherein the data scheme analyzer (110) is adapted for reconstructing the signal pulses by using a flip-flop, particularly using a flip-flop having a hysteresis behavior;
the probe (102) is adapted for deriving the probing data (104) by magnetically probing one of the group consisting of a current signal (106), an electric signal and an electromagnetic signal;
the probe (102) is configured to sense at least one of a magnetic field and a change in a magnetic field resulting from the signal (106) traveling along the signal transmission line (108);
the probe (102) is configured to partially surround the signal transmission line (108) in order to sense at least one of a magnetic field and a change in a magnetic field resulting from the signal (106) traveling along the signal transmission line (108);
the probe (102) is configured to entirely surround the signal transmission line (108) in order to sense at least one of a magnetic field and a change in a magnetic field resulting from the signal (106) traveling along the signal transmission line (108);
the probe (102) is configured to inductively couple with the signal transmission line (108) in order to sense at least one of a magnetic field and a change in a magnetic field resulting from the signal (106) traveling along the signal transmission line (108).

3. The device of claim 1 or any one of the above claims,
wherein the probe is configured as a pincer (200) being mechanically operable to selectively at least partially enclose a cable (108) carrying the signal (106) to be analyzed.

4. The device of the preceding claim,
wherein the probe comprises a manually operable actuator (202) adapted for selectively opening or closing the pincer (200).

5. The device of the preceding claim,
wherein the manually operable actuator (302) comprises a biasing mechanism, particularly a spring mechanism (304).

6. The device of claim 1 or any one of the above claims, comprising at least one of:
the probe comprises a handle (204) in and/or on which at least a part of the data scheme analyzer (110) is accommodated;
the probe (102) is adapted for deriving probing data (104) by magnetically probing the signal (106) traveling in a cable (108) in a non-invasive manner;
the probe (400) is adapted for deriving probing data (104) by simultaneously magnetically probing a plurality of signals (106) traveling simultaneously in a plurality of signal transmission lines.

7. The device of claim 1 or any one of the above claims,
wherein the probe (400) is adapted for deriving probing data (104) by simultaneously magnetically probing differential signals (106) traveling simultaneously in two signal transmission lines.

8. The device of the preceding claim,
wherein the data scheme analyzer (110) is adapted for analyzing the differential signals by adding or subtracting the differential signals.

9. The device of claim 7 or any one of the above claims,
wherein the probe (400) comprises two oppositely wound coils (402, 404) for simultaneously magnetically probing the differential signals.

10. The device (100) of claim 1 or any one of the above claims, comprising at least one of:
the probe (102) comprises one of the group consisting of a magnetic field detector (112), a Hall probe, an induction coil (206), an induction coil having a permanent magnetic core, and an electric field detector;
the data scheme analyzer (110) is adapted for receiving the derived probing data (104) from the probe (102) in at least one manner of the group consisting of a wireless manner and a wired manner;
the device (100) is adapted to probe at least one of the group consisting of an automotive signal transmission system, a high speed plug connection system, a computer card connection system, a communication network connection system, a hub connection system, a switch box connection system, an extruder card connection system, and a printed circuit board connection system;
the device (100) is adapted for serial protocol analysis;
the probe (102) is adapted for deriving the probing data (104) by inductively probing the signal (106) traveling along the signal transmission line (108).

11. A method of analyzing a data scheme, the method comprising deriving probing data (104) by magnetically probing a signal (106) traveling along a signal transmission line (108), and analyzing the data scheme of the signal (106) traveling along the signal transmission line (108) based on an analysis of the derived probing data (104).

12. A software program or product, preferably stored on a data carrier, for controlling or executing the method of the preceding claim, when run on a data processing system such as a computer.
